# EUROPÄISCHE PATENTANMELDUNG

(11) **EP 4 163 043 A1**
(43) Veröffentlichungstag der Anmeldung: **12.04.2023**
(21) Anmeldenummer: 21201474.0
(22) Anmeldetag: 07.10.2021
(51) Int. Cl.: B23K 9/095, B23K 9/10, B23K 9/32, B23K 3/02, B23K 3/08, B23K 9/12, B23K 9/167, B23K 9/173, B23K 10/02, H05H 1/26

(54) **STEUERUNG EINER SCHWEISS- UND/ODER LÖTRAUCHABSAUGEINRICHTUNG ABHÄNGIG VON DER LAGE ODER BEWEGUNG EINES ANGESCHLOSSENEN BRENNERS**

(71) Anmelder: EWM AG, 56271 Mündersbach (DE)
(72) Erfinder: Szczesny, Michael, 56271 Mündersbach (DE)
(74) Vertreter: Cohausz & Florack

(57) **Zusammenfassung**

Die Erfindung betrifft eine Vorrichtung (100, 300) zum Einsatz beim Schweißen oder Löten unter Schutzgasatmosphäre mit Anschlussmitteln (180, 380) zum Anschließen eines Brenners (210) mit integrierter Absaugung, mit einer Absaugeinrichtung (116, 316) zur Bereitstellung eines Absaugluftstroms (117) über die Anschlussmittel (180, 380) und mit einer Steuereinrichtung (190, 390), wobei die Steuereinrichtung (190, 390) dazu eingerichtet ist, Messwerte über die Lage und/oder die Bewegung eines im Betrieb an die Anschlussmittel (180, 380) angeschlossenen Brenners (210) zu erhalten und die Absaugeinrichtung (116, 316) abhängig von den erhaltenen Messwerten zu steuern. Die Erfindung betrifft weiter ein System (200, 400) zum Einsatz beim Schweißen oder Löten unter Schutzgasatmophäre mit einer solchen Vorrichtung (100, 300) sowie ein Verfahren zum Steuern einer Absaugeinrichtung (116, 316) einer Vorrichtung (100, 300) zum Einsatz beim Schweißen oder Löten unter Schutzgasatmosphäre.

## Beschreibung

Die Erfindung betrifft eine Vorrichtung zum Einsatz beim Schweißen oder Löten unter Schutzgasatmosphäre mit Anschlussmitteln zum Anschließen eines Brenners mit integrierter Absaugung, mit einer Absaugeinrichtung zur Bereitstellung eines Absaugluftstroms über die Anschlussmittel und mit einer Steuereinrichtung. Die Erfindung betrifft weiterhin ein System zum Einsatz beim Schweißen oder Löten unter Schutzgasatmosphäre umfassend eine solche Vorrichtung. Weiterhin betrifft die Erfindung ein Verfahren zum Steuern einer Absaugeinrichtung einer Vorrichtung zum Einsatz beim Schweißen oder Löten unter Schutzgasatmosphäre.

Die beim Schweißen oder Löten auftretenden hohen Temperaturen führen zur Bildung von Abgasen, insbesondere Rauchgas, die zum Teil gesundheitsschädlich sind. Zum Schutz der in unmittelbarer Nähe des Schweißvorgangs tätigen Arbeitskräfte ist es erforderlich, diese Abgase vom Arbeitsplatz abzusaugen, ehe sie sich mit der Raumluft mischen.

Eine besondere Schwierigkeit beim Absaugen der Abgase zeigt sich, wenn Verfahren zum Schweißen oder Löten unter Schutzgasatmosphäre durchgeführt werden. Für einen ordnungsgemäßen Betrieb ist es erforderlich, dass das während des Schweißoder Lötvorgangs applizierte Schutzgas die Elektrode und das Werkstück an der Stelle, an der Material aufgeschmolzen wird, sicher abdeckt. Andernfalls kann es an der betreffenden Stelle zu Oxidationsvorgängen und anderen Reaktionen kommen, die die Qualität des Schweißens oder Lötens nachteilig beeinflussen können. Wenn Schutzgas unmittelbar an der Elektrode, die den Lichtbogen erzeugt, oder um diese herum vorgesehen wird, ist es zur Ausbildung eines stabilen Schutzgasmantels erforderlich, dass keine störenden Luftströmungen das Schutzgas fortreißen.

Aus dem Stand der Technik sind verschiedene Verfahren und Vorrichtungen zur Steuerung der Absaugeinrichtung einer Schweißvorrichtung bekannt. In der EP 2 292 367 B1 wird beispielsweise ein Verfahren offenbart, bei dem die Absaugung in Abhängigkeit von an der Schweißvorrichtung einstellbaren oder voreingestellten Prozessparametern des Schweißprozesses gesteuert wird, nämlich zum Beispiel für die Brennervorschubgeschwindigkeit, die Drahtvorschubgeschwindigkeit oder den Drahtdurchmesser.

Es hat sich jedoch gezeigt, dass auch bei einer solchen automatischen Steuerung der Absaugeinrichtung noch Verbesserungsbedarf hinsichtlich der Nutzerfreundlichkeit und Arbeitseffizienz besteht.

Vor diesem Hintergrund liegt der vorliegenden Erfindung die Aufgabe zu Grunde, ein Verfahren und eine Vorrichtung zur Verfügung zu stellen, mit denen die Steuerung der Absaugung nutzerfreundlicher und/oder effektiver erfolgen kann.

Diese Aufgabe wird erfindungsgemäß gelöst durch eine Vorrichtung zum Einsatz beim Schweißen oder Löten unter Schutzgasatmosphäre mit Anschlussmitteln zum Anschließen eines Brenners mit integrierter Absaugung, mit einer Absaugeinrichtung zur Bereitstellung eines Absaugluftstroms über die Anschlussmittel und mit einer Steuereinrichtung, wobei die Steuereinrichtung dazu eingerichtet ist, Messwerte über die Lage und/oder die Bewegung eines im Betrieb an die Anschlussmittel angeschlossenen Brenners zu erhalten und die Absaugeinrichtung abhängig von den erhaltenen Messwerten zu steuern.

Verfahrensmäßig wird die zuvor genannte Aufgabe erfindungsgemäß gelöst durch ein Verfahren zum Steuern einer Absaugeinrichtung einer Vorrichtung zum Einsatz beim Schweißen oder Löten unter Schutzgasatmosphäre, insbesondere der zuvor beschriebenen Vorrichtung oder einer Ausführungsform davon, bei dem ein oder mehrere Messwerte über die Lage und/oder die Bewegung eines an die Vorrichtung zum Schweißen oder Löten angeschlossenen Brenners bestimmt werden und bei dem die Absaugeinrichtung abhängig von den ein oder mehreren Messwerten gesteuert wird.

Die Vorrichtung ist zum Einsatz beim Schweißen oder Löten unter Schutzgasatmosphäre ausgebildet. Insbesondere kann die Vorrichtung zum Einsatz beim Metallschutzgasschweißen (MSG-Schweißen), zum Beispiel zum Metallinertgasschweißen (MIG-Schweißen) oder Metallaktivgasschweißen (MAG-Schweißen), ausgebildet sein. Alternativ kann die Vorrichtung auch zum Einsatz beim Wolfram-Inertgas-Schweißen (WIG-Schweißen) oder zum Plasmaschweißen ausgebildet sein.

Die Vorrichtung kann eine Stromquelle, insbesondere Schweißstromquelle oder Lötstromquelle, zur Bereitstellung eines Schweiß- oder Lötstroms umfassen. Beispielsweise kann die Absaugeinrichtung oder die Steuereinrichtung der Vorrichtung oder ein Teil davon in die Stromquelle integriert sein. Es ist aber auch denkbar, dass die Vorrichtung keine Stromquelle aufweist und zum Schweißen oder Löten eine gesonderte Stromquelle verwendet wird.

Die Vorrichtung kann entsprechend zum Beispiel alleine oder zusammen mit weiteren Geräten, zum Beispiel einer gesonderten Schweiß- oder Lötstromquelle, zum Schweißen oder Löten unter Schutzgasatmosphäre verwendet werden.

Die Vorrichtung kann in einem oder mehreren Gehäusen untergebracht sein. Insbesondere kann die Vorrichtung mehr als ein Gerät umfassen, beispielsweise eine Stromquelle und ein Drahtvorschubgerät oder eine als gesondertes Gerät ausgebildete Absaugeinrichtung und ein Drahtvorschubgerät.

Wenn die Vorrichtung eine Stromquelle zur Bereitstellung eines Schweiß- oder Lötstroms umfasst, umfasst diese vorzugsweise ein Leistungsteil zur Bereiststellung des Schweiß- oder Lötstroms sowie eine Steuereinheit zur Steuerung der Stromquelle.

Die Vorrichtung weist weiter Anschlussmittel zum Anschließen eines Brenners mit integrierter Absaugung auf. Die Anschlussmittel können insbesondere ein oder mehrere Anschlüsse umfassen, an die für den Betrieb das Schlauchpaket des Brenners angeschlossen werden kann. Bei dem Brenner handelt es sich vorzugsweise um einen Handbrenner. Alternativ kann es sich bei dem Brenner auch um einen Brenner für das automatisierte Schweißen, insbesondere Roboterschweißen, handeln.

Die Vorrichtung umfasst weiter eine Absaugeinrichtung. Die Absaugeinrichtung dient zur Bereitstellung eines Absaugluftstroms über die Anschlussmittel. Zu diesem Zweck umfassen die Anschlussmittel insbesondere einen Anschluss zur Koppelung einer im Schlauchpaket des Brenners vorgesehenen Absaugleitung mit der Absaugeinrichtung.

Umfasst die Vorrichtung eine Stromquelle zur Bereitstellung eines Schweiß- oder Lötstroms, so kann die Absaugeinrichtung beispielsweise in der Stromquelle untergebracht sein.

Die Absaugeinrichtung kann alternativ auch als gesondertes Gerät vorgesehen sein. Dies ist besonders vorteilhaft beim MSG-Schweißen, da das beim MSG-Schweißen üblicherweise verwendete Drahtvorschubgerät mit dem daran angeschlossenen Schweißbrenner im Betrieb sehr weit weg von der Schweißstromquelle entfernt sein kann, zum Beispiel 30 bis 60 m. Eine separate Absaugeinrichtung kann dann in der Nähe des Drahtvorschubgerät positioniert werden, um die Absaugleitung im Schlauchpaket des Brenners möglichst kurz und die für den gewünschten Absaugluftstrom erforderliche elektrische Leistung möglichst gering zu halten.

Die Vorrichtung umfasst weiter eine Steuereinrichtung. Die Steuereinrichtung kann zum Beispiel durch eine Steuereinheit der Absaugeinrichtung oder, wenn die Vorrichtung eine Schweiß- oder Lötstromquelle umfasst, durch eine Steuereinheit der Schweiß- oder Lötstromquelle gebildet werden oder diese umfassen. Weist die Absaugeinrichtung eine eigene Steuereinheit auf, so kann diese zum Beispiel mit einer Steuereinheit der Stromquelle und/oder mit einer Steuereinheit eines Drahtvorschubgeräts über eine Datenverbindung verbunden sein.

Die Steuereinrichtung ist dazu eingerichtet, Messwerte über die Lage und/oder die Bewegung eines im Betrieb an die Anschlussmittel angeschlossenen Brenners zu erhalten und die Absaugeinrichtung abhängig von den erhaltenen Messwerten zu steuern. Auf diese Weise kann die Absaugeinrichtung automatisch abhängig von einer Lageänderung und/oder Bewegung des Brenners betrieben werden. Es wurde festgestellt, dass auf diese Weise eine nutzerfreundlichere und effektivere Steuerung der Absaugeinrichtung erreicht werden kann.

Unter der Lage des Brenners wird insbesondere die Orientierung des Brennerteils im Raum, beispielsweise dessen Ausrichtung zur Lotrichtung verstanden. Bei den Messwerten über die Lage des Brenners kann es sich beispielsweise um Messwerte über die Neigung des Brenners, insbesondere des Brennerteils, zur Lotrichtung handeln. Solche Messwerte können beispielsweise von einem im Brennerteil vorgesehenen Neigungssensor gemessen werden. Die Steuerung der Absaugeinrichtung abhängig von Messwerten über die Lage des Brenners ermöglicht einen automatischen Lage-abhängigen Betrieb der Absaugeinrichtung. Auf diese Weise kann zum Beispiel die Absaugleistung an die Lage des Brenners und die damit verbundene Schweiß- oder Lötposition angepasst werden.

Bei den Messwerten über die Bewegung des Brenners kann es sich beispielsweise um Messwerte über die Beschleunigung des Brenners, insbesondere des Brennerteils, in ein oder mehrere Richtungen, handeln. Der Messwert kann zum Beispiel einen Absolutbetrag der Beschleunigung oder einen Beschleunigungsvektor angeben. Solche Messwerte können insbesondere von einem im Brennerteil vorgesehenen Beschleunigungssensor gemessen werden. Die Steuerung der Absaugeinrichtung abhängig von Messwerten über die Bewegung des Brenners ermöglicht einen Betrieb der Absaugeinrichtung abhängig von der Nutzung des Brenners. Beispielsweise kann auf diese Weise erreicht werden, dass der Betrieb oder Leistungsbetrieb der Absaugeinrichtung beim Aufnehmen des Brenners durch den Schweißer automatisch gestartet wird, so dass sich bereits der für den Schweiß- oder Lötprozess erforderliche Absaugstrom einstellen kann, bevor der Schweißer mit dem eigentlichen Schweiß- oder Lötprozess beginnt.

Die zuvor genannte Aufgabe wird erfindungsgemäß weiterhin gelöst durch ein System zum Einsatz beim Schweißen oder Löten unter Schutzgasatmosphäre umfassend die zuvor beschriebene Vorrichtung oder eine Ausführungsform davon und einen an die Anschlussmittel der Vorrichtung anschließbaren Brenner mit integrierter Absaugung.

Bei dem Brenner handelt es sich vorzugsweise um einen Handbrenner. Alternativ kann es sich bei dem Brenner auch um einen Brenner für das automatisierte Schweißen, insbesondere Roboterschweißen, handeln. Der Brenner kann insbesondere ein Brennerteil mit einem Handgriff und einem Brennerkopf sowie ein Schlauchpaket zum Anschluss des Brennerteils an die Anschlussmittel der Vorrichtung aufweisen. Das Schlauchpaket kann beispielsweise ein oder mehrere Anschlüsse zur Koppelung an ein oder mehrere Anschlüsse der Anschlussmittel der Vorrichtung aufweisen.

Im Folgenden werden verschiedene Ausführungsformen der Vorrichtung, des Systems und des Verfahrens beschrieben, wobei die einzelnen Ausführungsformen jeweils unabhängig voneinander sowohl für die Vorrichtung und das System als auch für das Verfahren gelten. Weiterhin können die Ausführungsformen beliebig untereinander kombiniert werden.

Bei einer Ausführungsform ist die Steuereinrichtung dazu eingerichtet, die Absaugleistung abhängig von den erhaltenen Messwerten zu steuern, insbesondere einen von den erhaltenen Messwerten abhängigen Absaugleistungswert einzustellen. Bei einer entsprechenden Ausführungsform des Verfahrens wird die Absaugleistung der Absaugeinrichtung abhängig von den ein oder mehreren erhaltenen Messwerten gesteuert, insbesondere ein von den ein oder mehreren erhaltenen Messwerten abhängiger Absaugleistungswert eingestellt. Auf diese Weise kann die Absaugleistung zum Beispiel automatisch an die Lage des Brenners angepasst werden, so dass zum Beispiel bei verschiedenen Schweißpositionen ein stabiler Schutzgasmantel gewährleistet werden kann. Insbesondere erfordern verschiedene Schweißpositionen unterschiedliche Absaugluftströme, um einen stabilen Schutzgasmantel zu erzeugen. Durch die Steuerung der Absaugeinrichtung abhängig von den ein oder mehreren Messwerten über die Lage des Brenners können diese unterschiedlichen Anforderungen je nach Schweißposition automatisch berücksichtigt werden.

Die Steuerung der Absaugleistung kann beispielsweise über den Volumenstrom, beispielsweise über die Steuerung eines Ventils, und/oder über eine Drehzahl eines Rotors der Absaugeinrichtung und/oder über die elektrische Betriebsleistung, mit der die Absaugeinrichtung betrieben wird, gesteuert werden.

Bei dem Absaugleistungswert kann es sich beispielsweise um einen Soll-Wert oder auch um einen unteren und/oder oberen Grenzwert handeln, beispielsweise für den Volumenstrom, für eine Rotordrehzahl der Absaugeinrichtung und/oder für eine elektrische Betriebsleistung. Beispielsweise kann die Absaugeinrichtung eine Regelung für die Absaugleistung aufweisen, deren Soll-Wert bzw. Betriebsbereich abhängig von den erhaltenen ein oder mehreren Messwerten eingestellt wird. Ein geeigneter Soll-Wert für den Volumenstrom kann zum Beispiel im Bereich zwischen 20 m³/h und 100 m³/h liegen.

Bei einer Ausführungsform ist die Steuereinrichtung dazu eingerichtet ist, die Messwerte von dem im Betrieb an die Anschlussmittel angeschlossenen Brenner zu erhalten, insbesondere über die Anschlussmittel. Auf diese Weise sind gesonderte externe Sensoren zur Überwachung der Lage und/oder der Bewegung des Brenners entbehrlich. Insbesondere können auf diese Weise Messwerte genutzt werden, die von ein oder mehreren Sensoren im Brenner, insbesondere im Brennerteil, bestimmt werden. Einige Brenner weisen bereits zu anderen Zwecken derartige Sensoren auf. In diesem Fall kann eine Steuerung der Absaugeinrichtung anhand von Messwerten erfolgen, die mit ohnehin im Brenner vorhandenen Sensoren bestimmt werden, so dass keine zusätzlichen Sensoren erforderlich sind. Bei den Messwerten kann es sich insbesondere um Messwerte handeln, die mittels eines Lage- und/oder Bewegungssensors im Brenner bestimmt werden.

Bei einer entsprechenden Ausführungsform des Systems weist der Brenner ein oder mehrere Sensoren zum Messen von Werten über die Lage und/oder die Bewegung des Brenners auf und der Brenner ist dazu eingerichtet, unter Verwendung der ein oder mehreren Sensoren gemessenene Messwerte an die Vorrichtung zu übermitteln, insbesondere über die Anschlussmittel der Vorrichtung. Die ein oder mehreren Sensoren können insbesondere einen Neigungssensor und/oder einen Beschleunigungssensor umfassen.

Bei einer entsprechenden Ausführungsform des Verfahrens werden die ein oder mehreren Messwerte über die Lage und/oder die Bewegung unter Verwendung eines in den Brenner integrierten Sensors gemessen.

Bei einer weiteren Ausführungsform ist die Steuereinrichtung dazu eingerichtet, abhängig von den erhaltenen Messwerten eine Bewegung des Brenners zu detektieren und bei Detektion der Bewegung die Absaugeinrichtung einzuschalten oder auf einen Leistungsbetrieb umzuschalten, insbeondere die Absaugleistung zu erhöhen. Beispielsweise kann die Steuereinrichtung dazu eingerichtet sein, eine Bewegung des Brenners nach einer vorgegebenen Mindestzeitdauer ohne Bewegung zu detektieren. Beispielsweise kann die Steuereinrichtung feststellen, wenn der Brenner erstmals nach einer längeren Zeit wieder bewegt wird, zum Beispiel durch das Aufheben des Brenners durch den Schweißer. Auf diese Weise beginnt der Betrieb bzw. Leistungsbetrieb der Absaugeinrichtung bereits vor Beginn des eigentlichen Schweißoder Lötvorgangs, so dass sich der für die gewünschte Absaugströmung erforderliche Unterdruck aufbauen kann und beim anschließenden Beginn eines Schweiß- oder Lötvorgangs die erforderliche Absaugströmung unmittelbar zur Verfügung steht.

Die Steuereinrichtung kann dazu eingerichtet sein, eine Bewegung des Brenners erst zu detektieren, wenn die Messwerte oberhalb eines bestimmten Schwellwerts liegen. Auf diese Weise können Fehlerkennungen von Bewegungen durch Messwerte unterhalb des Schwellwerts, die zum Beispiel durch Vibrationen oder Erschütterungen in der Umgebung des Brenners verursacht werden, verhindert werden.

Bei einer Ausführungsform ist die Steuereinrichtung dazu eingerichtet, ein Brennertastersignal über das Betätigen eines Brennertasters eines im Betrieb an die Anschlussmittel angeschlossenen Brenners zu erhalten und bei Erhalt des Brennertastersignals die Absaugeinrichtung einzuschalten oder deren Absaugleistung für einen Leistungsbetrieb zu erhöhen. Auf diese Weise kann der Nutzer die Absaugeinrichtung manuell starten oder von einem Leerlaufbetrieb mit geringer Drehzahl auf einen Leistungsbetrieb umschalten, bevor er, insbesondere mittels erneuter Betätigung des Brennertasters, mit dem Schweißen bzw. Löten beginnt. Auf diese Weise beginnt der Betrieb bzw. Leistungsbetrieb der Absaugeinrichtung bereits vor Beginn des eigentlichen Schweiß- oder Lötvorgangs, so dass sich der für die gewünschte Absaugströmung erforderliche Unterdruck aufbauen kann und beim anschließenden Beginn eines Schweiß- oder Lötvorgangs die erforderliche Absaugströmung unmittelbar zur Verfügung steht. Zu diesem Zweck kann die Steuereinrichtung vorzugsweise dazu eingerichtet sein, bei Erhalt eines ersten Brennertastersignals die Absaugeinrichtung einzuschalten oder deren Absaugleistung für einen Leistungsbetrieb zu erhöhen und bei Erhalt eines nachfolgenden zweiten Brennertastersignals den Beginn eines Schweiß- und/oder Lötvorgangs zu bewirken.

Bei einer Ausführungsform umfassen die Anschlussmittel einen Absauganschluss zum Anschließen einer Absaugleitung eines im Betrieb an die Anschlussmittel angeschlossenen Brenners. Umfasst die Vorrichtung eine Stromquelle zur Bereitstellung eines Schweiß- oder Lötstroms, so kann die Absaugeinrichtung beispielsweise in die Stromquelle integriert und der Absauganschluss an der Stromquelle angeordnet sein. Ist die Absaugeinrichtung als gesondertes Gerät ausgebildet, so kann der Absauganschluss insbesondere direkt an der Absaugeinrichtung angeordnet sein.

An eine solche Vorrichtung mit einem Absauganschluss kann zum Beispiel ein Brenner angeschlossen werden, dessen Schlauchpaket mehrere Anschlüsse aufweist, insbesondere einen Anschluss zum Anschließen des Schlauchpakets an einen Brenneranschluss eines Drahtvorschubgeräts und einen weiteren Anschluss zum Anschließen des Schlauchpakets an den Absauganschluss.

Bei einer Ausführungform umfasst die Vorrichtung eine Stromquelle zur Bereitstellung eines Schweiß- oder Lötstroms auf. Die Absaugeinrichtung kann beispielsweise in die Stromquelle integriert sein.

Bei einer Ausführungsform umfasst die Vorrichtung ein Drahtvorschubgerät und die Anschlussmittel umfassen einen Brenneranschluss am Drahtvorschubgerät. Der Brenneranschluss dient insbesondere zur Bereitstellung des mit dem Drahtvorschubgerät geförderten Schweiß- oder Lötdrahts. Weiterhin kann der Brenneranschluss zur Bereitstellung eines Schutzgasstroms ausgebildet sein. Weiterhin kann der Brenneranschluss zur Bereitstellung des von der Schweißstromquelle bereitgestellten Schweiß- oder Lötstroms eingerichtet sein.

Das Drahtvorschubgerät weist vorzugsweise eine Steuereinheit auf. Beispielsweise kann die Steuereinrichtung der Vorrichtung durch die Steuereinheit des Drahtvorschubgeräts gebildet werden oder diese umfassen. Insbesondere kann die Steuereinheit des Drahtvorschubgeräts mit der Absaugeinrichtung, insbesondere einer Steuereinrichtung der Absaugeinrichtung über eine Datenverbindung verbunden sein.

Bei einer Ausführungsform ist die Steuereinrichtung dazu eingerichtet, die Absaugleistung zu Beginn des Betriebs oder Leistungsbetriebs der Absaugeinrichtung zunächst auf einen Start-Absaugleistungswert einzustellen und danach abzusenken.

Auf diese Weise wird die Absaugeinrichtung zunächst mit hoher Start-Absaugleistung betrieben, um den für die Bereitstellung des Absaugluftstroms erforderlichen Unterdruck schneller aufzubauen zu können. Dadurch kann die Zeitspanne zwischen dem Start der Absaugeinrichtung bzw. dem Beginn des Leistungsbetriebs der Absaugeinrichtung und dem Erreichen der gewünschten Absaugleistung bzw. des gewünschten Absaugluftstroms verkürzt werden. Die Start-Absaugleistung kann abhängig oder unabhängig von den Messwerten eingestellt werde. Beispielsweise kann die Steuereinrichtung dazu eingerichtet sein, die Absaugeinrichtung für eine bestimmte Zeitdauer mit dem Start-Absaugleistungswert zu betreiben, bevor die Absaugleistung abgesenkt wird.

Das Absenken der Absaugleistung erfolgt vorzugsweise auf eine Soll-Absaugleistung bzw. einen Soll-Absaugluftstrom, der abhängig von den Messwerten eingestellt wird. Insbesondere kann die Steuereinrichtung hierzu eingerichtet sein.

Weitere Vorteile und Merkmale der Vorrichtung, des Systems und des Verfahren ergeben sich aus der nachfolgenden Beschreibung von Ausführungsbeispielen, wobei Bezug auf die beigefügte Zeichnung genommen wird.

In der Zeichnung zeigen
- Fig. 1a-b: ein Ausführungsbeispiel der Vorrichtung und des Systems,
- Fig. 2: das Ausführungsbeispiel aus Fig. 1a-b in abstrahierter Darstellung,
- Fig. 3a-c: Diagramme zu einem Ausführungsbeispiel des Verfahrens mit den Vorrichtungen aus Fig. 2 und 5,
- Fig. 4: ein weiteres Ausführungsbeispiel der Vorrichtung und des Systems und
- Fig. 5: das Ausführungsbeispiel aus Fig. 4 in abstrahierter Darstellung.

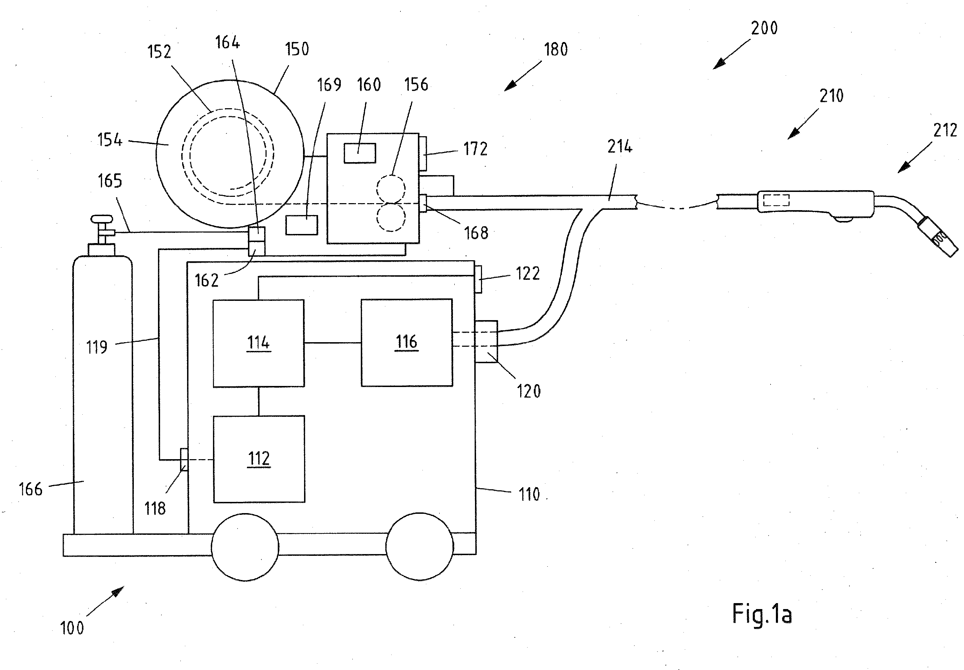

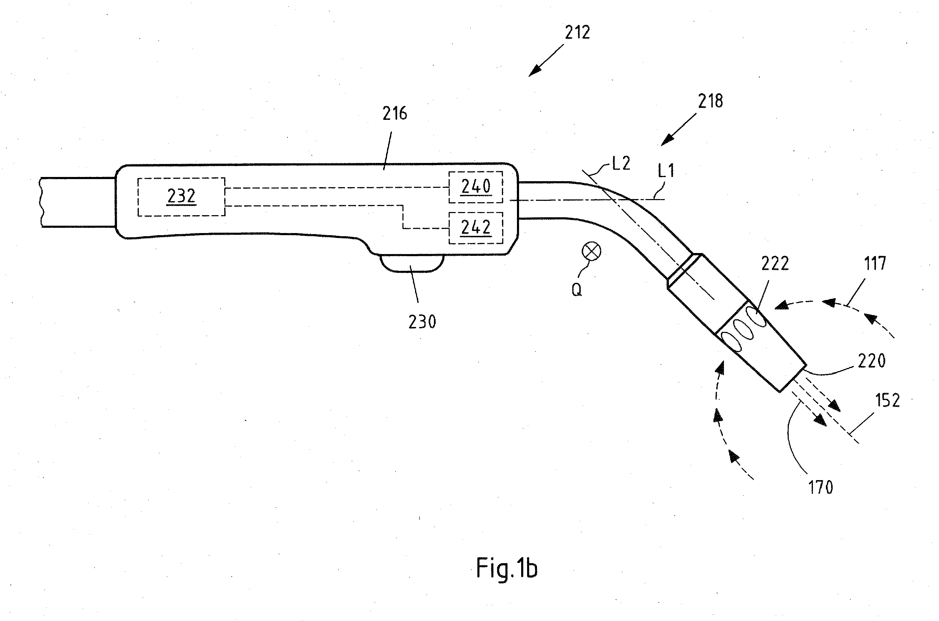

Die Fig. 1a-b zeigen ein Ausführungsbeispiel der Vorrichtung und des Systems in schematischer Darstellung. Fig. 1a zeigt eine schematische Ansicht der Vorrichtung 100 und des Systems 200. Fig. 1b zeigt eine schematische Detailansicht aus Fig. 1a.

Die Vorrichtung 100 ist im vorliegenden Ausführungsbeispiel als Vorrichtung zum Einsatz beim Schweißen ausgebildet und wird im Folgenden entsprechend beschrieben. Alternativ ist es auch denkbar, die Vorrichtung 100 in entsprechender Weise als Vorrichtung zum Einsatz beim Löten auszubilden.

Weiterhin ist die Vorrichtung 100 im vorliegenden Ausführungsbeispiel zum Einsatz beim Metallschutzgas-(MSG)-schweißen ausgebildet, beispielsweise zum Metallinertgas-(MIG)- oder zum Metallaktivgas-(MAG)-Schweißen. Die Vorrichtung 100 könnte alternativ aber auch zum Einsatz beim WIG-Schweißen oder Plasmaschweißen ausgebildet sein.

Die Vorrichtung 100 umfasst eine Schweißstromquelle 110 zur Bereitstellung eines Schweißstroms mit einem Leistungsteil 112, einer Steuereinheit 114 und einer in die Schweißstromquelle 110 integrierten Absaugeinrichtung 116. Die Steuereinheit 114 ist zur Steuerung der Schweißstromquelle 110 eingerichtet und steuert insbesondere das Leistungsteil 112 und die Absaugeinrichtung 116. Das Leistungsteil 112 ist dazu eingerichtet, einen Schweißstrom zum Schweißen über einen elektrischen Ausgang 118 der Schweißstromquelle 110 bereitzustellen. Weiterhin weist die Schweißstromquelle 110 einen Absauganschluss 120 für eine Absaugleitung auf, wobei die Absaugeinrichtung 116 dazu eingerichtet ist, einen Unterdruck bzw. Absaugluftstrom über den Absauganschluss 120 bereitzustellen.

Die Vorrichtung 100 umfasst weiter ein Drahtvorschubgerät 150 zum Transport eines Schweißdrahts 152. Das Drahtvorschubgerät 150 weist einen Schweißdrahtvorrat 154 in Form einer Schweißdrahttrommel, eine Schweißdrahtfördereinrichtung 156, die vorzugsweise angetriebene Rollen zur kontrollierten Förderung des Schweißdrahts 152 umfasst, und eine Steuereinheit 160, die zur Steuerung des Drahtvorschubgeräts 150 ausgebildet ist, auf.

Das Drahtvorschubgerät 150 weist weiter einen elektrischen Eingang 162 zum Einspeisen des von der Schweißstromquelle 110 bereitgestellten Schweißstroms auf, der für den Betrieb über eine elektrische Leitung 119 mit dem elektrischen Ausgang 118 der Schweißstromquelle verbunden wird. Weiter weist das Drahtvorschubgerät 150 einen Schutzgas-Einlass 164 zum Einspeisen eines Schutzgases auf, der für den Betrieb über eine Gasleitung 165 mit einer Schutzgasquelle 166, wie zum Beispiel einer Gasflasche, verbunden wird.

Das Drahtvorschubgerät 150 weist weiter einen Brenneranschluss 168 zum Anschließen eines Schweißbrenners 210 auf. Über den Brenneranschluss 168 werden der von der Schweißdrahtfördereinrichtung 156 geförderte Schweißdraht 152, der von der Schweißstromquelle 110 bereitgestellte Schweißstrom und das von der Schutzgasquelle 166 bereitgestellte Schutzgas für den Schweißbrenner 210 bereitgestellt.

Die Steuereinheit 160 ist insbesondere zur Steuerung der Schweißdrahtfördereinrichtung 156 eingerichtet. Weiterhin kann die Steuereinheit 160 dazu eingerichtet sein, den am Brenneranschluss 168 bereitgestellten Schutzgasstrom zu steuern. Zu diesem Zweck kann das Drahtvorschubgerät 150 zwischen dem Schutzgas-Einlass 164 und dem Brenneranschluss 168 ein zum Beispiel steuerbares Ventil 169 aufweisen, mit dem sich der Schutzgasstrom einstellen lässt.

Die Steuereinheit 114 der Schweißstromquelle 110 und die Steuereinheit 160 des Drahtvorschubgeräts 150 sind vorzugsweise über eine Kommunikationsverbindung miteinander verbunden, zum Beispiel über die Leitung 119 oder über eine gesonderte Datenleitung, so dass eine der beiden Steuereinheiten 114,160 Steuerbefehle an die jeweilige andere der beiden Steuereinheiten 114,160 übertragen kann. Auf diese Weise kann beispielsweise die Steuereinheit 114 dazu eingerichtet sein, sowohl die Schweißstromquelle 110 als auch das Drahtvorschubgerät 150 zu steuern. Die Steuereinheit 114 und die Steuereinheit 160 bilden gemeinsam eine Steuereinrichtung 190 der Vorrichtung 100.

An der Schweißstromquelle 110 und/oder an dem Drahtvorschubgerät 150 ist vorzugsweise eine jeweilige Nutzerschnittstelle 122, 172 vorgesehen, über die der Nutzer Betriebsinformationen ablesen und/oder Steuerbefehle eingeben kann.

Das System 200 umfasst die Vorrichtung 100 und einen an die Vorrichtung 100 angeschlossenen Schweißbrenner 210. Der Schweißbrenner 210 weist ein Brennerteil 212 und ein Schlauchpaket 214 auf, mit dem das Brennerteil 212 an die Vorrichtung 100 angeschlossen ist. Fig. 1b zeigt eine schematische Detailansicht des Brennerteils 212.

Das Schlauchpaket 214 ist an den Brenneranschluss 168 des Drahtvorschubgeräts 150 angeschlossen, so dass im Betrieb der von der Schweißdrahtfördereinrichtung 156 geförderte Schweißdraht 152 über den Brenneranschluss 168 durch eine durch das Schlauchpaket 214 verlaufende Hohlleitung zum Brennerteil 212 geführt wird und weiter der von der Schweißstromquelle 110 bereitgestellte und durch das Drahtvorschubgerät 150 geschleifte Schweißstrom über den Brenneranschluss 168 durch eine durch das Schlauchpaket 214 verlaufende elektrische Leitung zum Brennerteil 212 geleitet wird, wo der Schweißstrom über eine Kontaktierung auf den Schweißdraht 152 geleitet wird. Weiterhin wird im Betrieb der am Brenneranschluss 168 bereitgestellte Schutzgasstrom durch eine durch das Schlauchpaket 214 verlaufende Schutzgasleitung zum Brennerteil 212 geleitet, um dort einen Schutzgasmantel für den Schweißvorgang zu erzeugen.

Das Schlauchpaket 214 ist weiterhin über eine Abzweigung an den Absauganschluss 120 der Schweißstromquelle 110 angeschlossen, so dass im Betrieb ein von der Absaugeinrichtung 116 bewirkter Absaugluftstrom 117 über eine durch das Schlauchpaket 214 verlaufende Absaugleitung am Brennerteil 212 bereitgestellt werden kann.

Der Brenneranschluss 168 des Drahtvorschubgeräts 150 und der Absauganschluss 120 der Schweißstromquelle bilden zusammen Anschlussmittel 180 der Vorrichtung 100 zum Anschluss des Brenners 210.

Das Brennerteil 212 umfasst einen Handgriff 216 und einen Brennerkopf 218 mit einer Öffnung 220, aus dem im Betrieb der mit dem Schweißstrom beaufschlagte Schweißdraht 152 herausgeführt wird und der Schutzgasstrom 170 austritt.

Der Brennerkopf 218 weist weiterhin Absaugöffnungen 222 auf, die über das Schlauchpaket 214 und den Absauganschluss 120 mit der Absaugeinrichtung 116 verbunden sind, so dass im Betrieb ein Absaugluftstrom 117 am Brennerkopf 218 bereitgestellt wird, mit dem beim Schweißen entstehende Rauchgase durch den Brennerkopf 218 abgesaugt werden.

Am Handgriff 216 des Brennerteils 212 ist ein Brennertaster 230 vorgesehen. Bei einfachen Schweißbrennern sind die Anschlusspole des Brennertasters über zwei durch das Schlauchpaket 214 verlaufende elektrische Brennertaster-Leitungen mit entsprechenden Kontakten am Brenneranschluss 168 verbunden, so dass die Steuereinrichtung 190 die Betätigung des Brennertasters 230 feststellen und zum Beispiel bei Betätigung des Brennertasters 230 einen Schweißvorgang starten kann. Bei technisch weiter entwickelten Schweißbrennern mit einer eigenen Brennersteuereinheit 232 kann der Brennertaster zusätzlich oder alternativ mit der Brennersteuereinheit 232 verbunden sein. Die Brennersteuereinheit 232 kann über die Brennertaster-Leitungen und/oder über gesonderte durch das Schlauchpaket verlaufende Datenleitungen und Kontakte am Brenneranschluss 168 oder Absauganschluss 120 mit der Steuereinrichtung 190 verbunden sein.

Weiter sind im Brennerteil 212, beispielsweise im Handgriff 216 des Brennerteils 212, mehrere Sensoren 240, 242 angeordnet, mit denen Messwerte über die Lage und/oder Bewegung des Brennerteils 212 gemessen werden können. Bei dem Sensor 240 kann es sich zum Beispiel um einen Lagesensor handeln, der Messwerte über die Neigung des Brennerteils 212 zur Lotrichtung misst. Der Sensor 240 kann zum Beispiel als zweiachsiger Lagesensor ausgebildet sein, der die Neigung des Brennerteils 212 um eine Längsachse (z.B. L1 oder L2) und eine Querachse (z.B. Q, senkrecht zur Zeichnungsebene in Fig. 1b) misst.

Bei dem Sensor 242 kann es sich zum Beispiel um einen dreiachsigen Beschleunigungssensor handeln, der Messwerte über die Beschleunigung des Brennerteils 212 in drei Raumrichtungen misst.

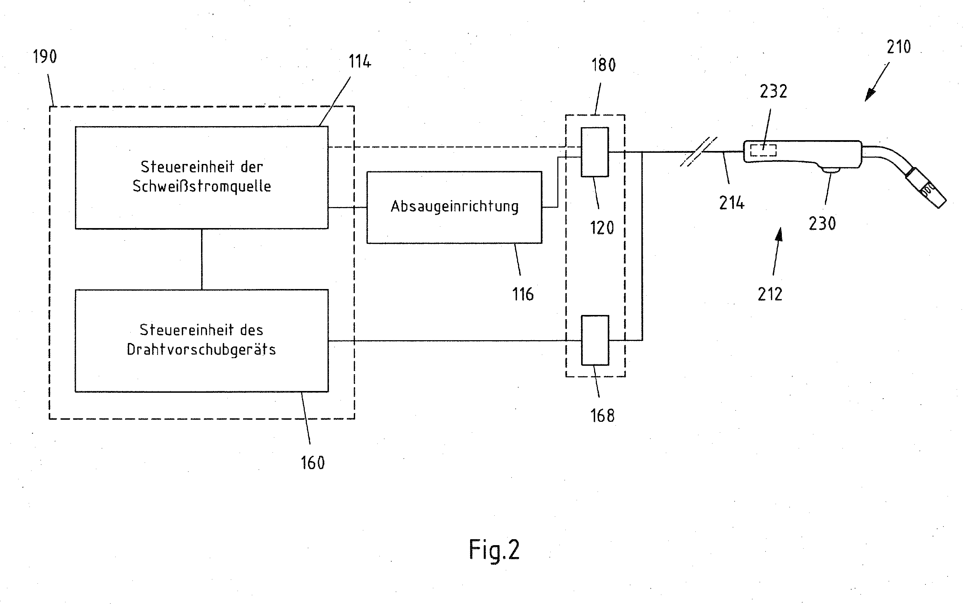

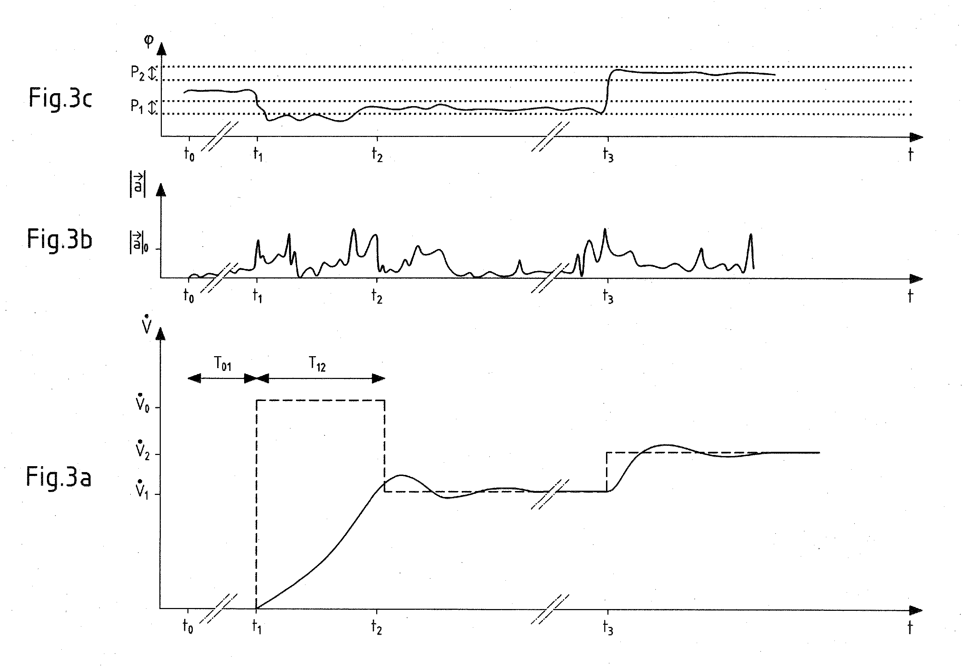

Die Funktionsweise der Vorrichtung 100 und des Systems 200 zur Steuerung der Absaugeinrichtung 116 wird nachfolgend anhand der Figuren 2 und 3a-c erläutert.

Fig. 2 zeigt die Steuereinheit 114 der Schweißstromquelle 110, die mit der Steuereinheit 114 verbundene Absaugeinrichtung 116 sowie den Absauganschluss 120, an den der Schweißbrenner 210 angeschlossen ist. Weiterhin zeigt Fig. 2 die Steuereinheit 160 des Drahtvorschubgeräts 150 sowie den Brenneranschluss 168, an den der Schweißbrenner 210 ebenfalls angeschlossen ist. Der Absauganschluss 120 und der Brenneranschluss 168 bilden gemeinsam die Anschlussmittel 180 der Vorrichtung 100 für den Schweißbrenner 210. Die Steuereinheiten 114 und 160 bilden gemeinsam die Steuereinrichtung 190 der Vorrichtung 100.

Die Brennersteuereinheit 232 des Schweißbrenners 210 ist dazu eingerichtet, Messwerte über die Lage des Brennerteils 212 vom Sensor 240 und Messwerte über die Bewegung des Brennerteils 212, nämlich über dessen Beschleunigung zu empfangen und über eine Datenleitung im Schlauchpaket 214 zu senden, die zum Beispiel über einen entsprechenden Kontakt am Brenneranschluss 168 oder am Absauganschluss 120 von der Steuereinrichtung 190 erhalten wird.

Die Steuereinrichtung 190 ist dazu eingerichtet, die Absaugeinrichtung 116 abhängig von den erhaltenen Messwerten zu steuern.

Die Fig. 3a-c illustrieren eine mögliche Steuerung der Absaugeinrichtung durch die Steuereinrichtung 190.

Bei dem Diagramm in Fig. 3a ist auf der Abszisse die Zeit t und auf der Ordinate der Volumenstrom V aufgetragen. Die gestrichelte Linie zeigt den von der Steuereinrichtung 190 an der Absaugeinrichtung 116 eingestellten Volumenstrom (Soll-Wert). Die durchgezogene Linie zeigt den tatsächlichen Volumenstrom (Ist-Wert).

Bei dem Diagramm in Fig. 3b ist auf der Abszisse die Zeit t und auf der Ordinate die Beschleunigung |a̅| des Brennerteils 212 aufgetragen. Die Beschleunigung ist vorliegend als Betrag eines vom Sensor 240 gemessenen dreidimensionalen Beschleunigungsvektors a̅ aufgetragen.

Bei dem Diagramm in Fig. 3c ist auf der Abszisse die Zeit t und auf der Ordinate ein Neigungswinkel ϕ des Brennerteils 212 aufgetragen. Der Neigungswinkel ϕ wird vom Sensor 242 gemessen und kann zum Beispiel die Neigung der Längsachse des Brennerteils 212 zur Lotrichtung anzeigen.

Zum Zeitpunkt to ist der an den Anschlussmitteln 180 angeschlossene Schweißbrenner 210 in Ruhe und hängt zum Beispiel mit dem Schlauchpaket über einer an der Schweißstromquelle 110 oder am Drahtvorschubgerät 150 vorgesehenen Halterung. Die Absaugeinrichtung 116 ist zu diesem Zeitpunkt ausgeschaltet oder in einem Leerlaufbetrieb (V = 0).

Solange sich der Schweißbrenner 210 in Ruhe befindet werden vom Sensor 240 nur geringe Beschleunigungen gemessen, die zum Beispiel durch Vibrationen in der Umgebung oder ein Umherfahren des Schweißgeräts 110 hervorgerufen werden. Da die gemessenen Beschleunigungswerte unterhalb eines vorgegebenen Schwellwertes |a̅|₀ liegen, werden diese Beschleunigungswerte von der Steuereinrichtung 190 nicht als Bewegung des Schweißbrenners 210 gewertet.

Zum Zeitpunkt t₁ wird der Schweißbrenner vom Schweißer aufgenommen, um einen Schweißvorgang durchzuführen. Durch diese Bewegung des Brenners 210 übersteigt die Beschleunigung des Brenners den Schwellwert |a̅|_{0.} Die Steuereinrichtung 190 ist dazu eingerichtet, ein solches Überschreiten des Schwellwertes |a̅|₀ als Bewegung des Schweißbrenners 210 zu detektieren und die Absaugeinrichtung 116 einzuschalten, wenn diese noch ausgeschaltet ist, oder die Absaugeinrichtung 116 auf einen Leistungsbetrieb umzuschalten, insbesondere die Absaugleistung zu erhöhen.

Weiterhin ist die Steuereinrichtung 190 dazu eingerichtet, die Absaugleistung der Absaugeinrichtung 116 zunächst für eine Zeitdauer T₁₂ auf einen Start-Absaugleistungswert einzustellen, in Fig. 3 als Start-Volumenstromwert Vo angegeben, bevor die Absaugleistung zum Zeitpunkt t₂ auf einen Soll-Volumenstromwert Vi abgesenkt wird. Auf diese Weise wird zunächst ein hoher Start-Volumenstromwert eingestellt, der ein schnelleres Anlaufen der Absaugeinrichtung 116 bewirkt, so dass der gewünschte Soll-Volumenstromwert V̇₁ schneller erreicht wird. Entsprechend zeigt der in Fig. 3 als durchgezogene Linie dargestellte Ist-Wert der Absaugleistung ab dem Zeitpunkt t₁ einen recht steilen Anstieg. Bei der Umstellung des vorgegebenen Soll-Werts zum Zeitpunkt t₂ zeigt der Ist-Wert sodann einen durch die VolumenstromRegelung der Absaugeinrichtung 116 bewirkten Verlauf zum Soll-Volumenstromwert V̇₁.

Die Zeitdauer T₁₂ kann vorgegeben sein. Alternativ kann die Zeitdauer T₁₂ abhängig vom Ist-Wert der Absaugleistung gewählt werden. Beispielsweise kann die Steuereinrichtung 190 vom Start-Volumenstromwert Vo auf den Soll-Volumenstromwert Vi umstellen, wenn der Ist-Wert den Soll-Volumenstromwert V̇₁ überschritten hat.

Bei dem Soll-Volumenstromwert Vi kann es sich um einen vorgegebenen Soll-Volumenstromwert handeln. Es ist auch denkbar, dass der Soll-Volumenstromwert ermittelt wird, beispielsweise in Abhängigkeit von den Messwerten über die Lage und/oder Bewegung des Brenners 210, insbesondere abhängig von |a̅| oder ϕ. Insbesondere kann die Steuereinrichtung 190 dazu eingerichtet sein, den Soll-Volumenstromwert abhängig von der durch ϕ angezeigten Lage des Brenners 210 auszuwählen, über die auf die Schweißposition rückgeschlossen werden kann.

Im vorliegenden Beispiel ist die Steuereinrichtung 190 dazu eingerichtet, einen vorgegebenen Soll-Volumenstromwert V̇₁ auszuwählen und einzustellen, wenn der Neigungswinkel ϕ innerhalb des in Fig. 3c mit P₁ bezeichneten Winkelbereichs liegt, und einen vorgegebenen Soll-Volumenstromwert V₂ auszuwählen und einzustellen, wenn der Neigungswinkel ϕ innerhalb des in Fig. 3c mit P₂ bezeichneten Winkelbereichs liegt. Auf diese Weise kann der Soll-Volumenstrom der Absaugeinrichtung 116 automatisch abhängig von der Lage des Schweißbrenners 210 und damit abhängig von der Schweißposition eingestellt werden.

Zum Zeitpunkt t₃ ändert der Schweißer beispielsweise die Schweißposition und dadurch die Lage des Brenners, woraufhin die Steuereinrichtung 190 automatisch eine Anpassung des Soll-Volumenstromwerts bewirkt.

Eine genauere Bestimmung der Schweißposition kann beispielsweise dadurch erreicht werden, dass neben dem Neigungswinkel ϕ zum Beispiel auch noch ein weiterer Neigungswinkel um eine Querachse des Brenners 210 berücksichtigt wird.

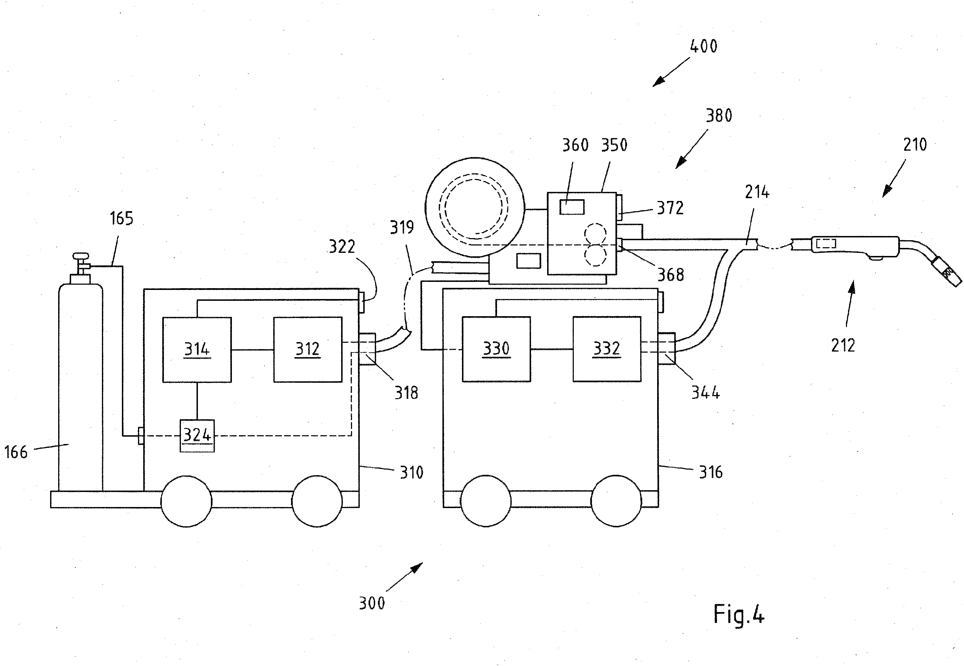

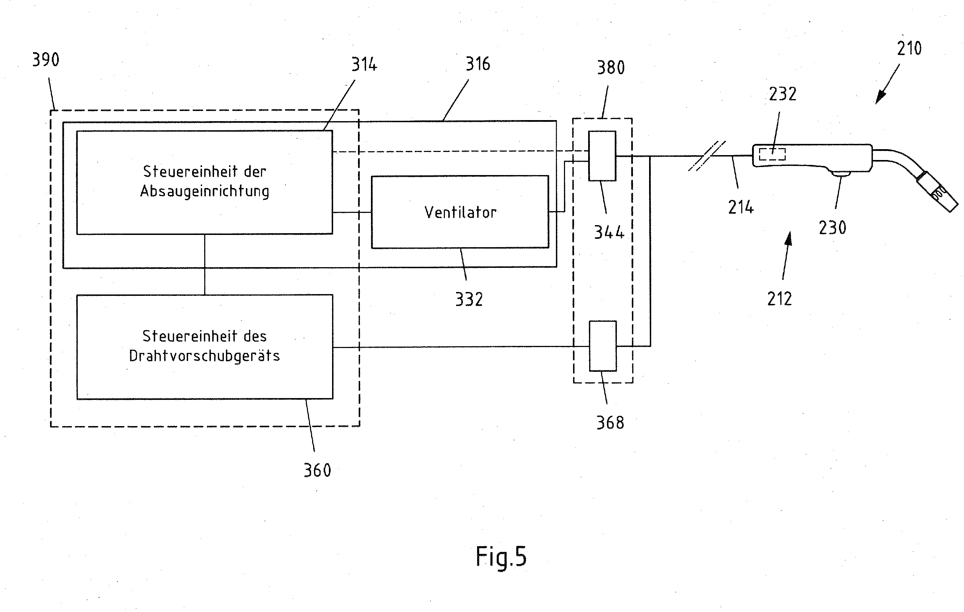

Fig. 4 zeigt ein weiteres Ausführungsbeispiel der Vorrichtung und des Systems in einer der Fig. 1a entsprechenden schematischen Darstellung. Weiterhin zeigt Fig. 5 eine der Fig. 2 entsprechende Darstellung für das weitere Ausführungsbeispiel.

Die Vorrichtung 300 und die Vorrichtung 100 weisen einen ähnlichen Aufbau und eine ähnliche Funktionsweise auf, so dass im Folgenden vor allem die Unterschieden zwischen den beiden Vorrichtungen beschrieben werden und im Übrigen auf die obige Beschreibung verwiesen wird.

Die Vorrichtung 300 ist im vorliegenden Ausführungsbeispiel als Vorrichtung zum Einsatz beim Schweißen ausgebildet und wird im Folgenden entsprechend beschrieben. Alternativ ist es auch denkbar, die Vorrichtung 300 in entsprechender Weise als Vorrichtung zum Einsatz beim Löten auszubilden.

Weiterhin ist die Vorrichtung 300 im vorliegenden Ausführungsbeispiel zum Einsatz beim Metallschutzgas-(MSG)-schweißen ausgebildet, beispielsweise zum Metallinertgas-(MIG)- oder zum Metallaktivgas-(MAG)-Schweißen. Die Vorrichtung 300 könnte alternativ aber auch zum Einsatz beim WIG-Schweißen oder Plasmaschweißen ausgebildet sein.

Die Vorrichtung 300 unterscheidet sich dadurch von der Vorrichtung 100, dass die Absaugeinrichtung 316 als von der Schweißstromquelle 310 separates Absauggerät 317 ausgebildet ist. Die Vorrichtung 300 umfasst das Absauggerät 317 sowie ein im Betrieb damit verbundenes Drahtvorschubgerät 350. Die Schweißstromquelle ist vorliegend separat ausgebildet und nicht Teil der Vorrichtung 300.

Die Schweißstromquelle 310 weist wie die Schweißstromquelle 110 ein Leistungsteil 312, eine Steuereinheit 314 und eine Nutzerschnittstelle 322 auf. Weiterhin weist die Schweißstromquelle 310 einen Anschluss 318 für ein Schlauchpaket 319 zum Drahtvorschubgerät 350 auf. Über den Anschluss 318 werden der Schweißstrom vom Leistungsteil 312 sowie der durch die Schweißstromquelle 310 geleitete und zum Beispiel durch ein steuerbares Ventil 324 der Schweißstromquelle 310 gesteuerte Schutzgasstrom bereitgestellt.

Das Absauggerät 317 weist eine Steuereinheit 330, einen von der Steuereinheit 330 gesteuerten Ventilator 332 zur Erzeugung des Absaug-Volumenstroms, einen Absauganschluss 344 sowie eine Nutzerschnittstelle 336 auf. Der Schweißbrenner 210 ist über das Schlauchpaket 214 an dem Brenneranschluss 368 des Drahtvorschubgeräts 350 sowie an dem Absauganschluss 344 des Absauggeräts 317 angeschlossen. Der Brenneranschluss 368 und der Absauganschluss 344 bilden gemeinsam die Anschlussmittel 380 der Vorrichtung 300. Die Steuereinrichtung 390 der Vorrichtung 300 umfasst die Steuereinheit 330. Darüber hinaus kann die Steuereinrichtung 390 optional auch die Steuereinheit 360 des Drahtvorschubgeräts 350 umfassen.

Die Steuereinrichtung 390 ist dazu eingerichtet, Messwerte über die Lage und/oder die Bewegung eines im Betrieb an die Anschlussmittel 380 angeschlossenen Brenners 210 (s. Fig. 1b) zu erhalten, insbesondere zu empfangen. Zu diesem Zweck kann beispielsweise am Absauganschluss 344 ein Kontakt zur Kontaktierung einer Datenleitung im Schlauchpaket 214 vorgesehen sein, über den vom Brenner 210 gesandte Messwerte, zum Beispiel vom Sensor 240 oder 242, von der Steuereinheit 330 empfangen werden können. Alternativ kann auch am Brenneranschluss 368 ein Kontakt zur Kontaktierung einer Datenleitung im Schlauchpaket 214 vorgesehen sein, über den vom Brenner 210 gesandte Messwerte, zum Beispiel vom Sensor 240 oder 242, von der Steuereinheit 360 des Drahtvorschubgeräts 350 empfangen werden können, die die Brenner-Kennung über eine Datenverbindung 372 zur Steuereinheit 330 weiterleitet.

Die Steuereinrichtung 390, insbesondere die Steuereinheit 330, ist weiter dazu eingerichtet, die Absaugeinrichtung 316, insbesondere den Ventilator 332, abhängig von den erhaltenen Messwerten zu steuern. Die Steuerung der Absaugeinrichtung 316, insbesondere des Ventilators 332 abhängig von den Messwerten kann in ähnlicher Weise erfolgen, wie anhand der Figuren 2 und 3 für die Vorrichtung 100 beschrieben worden ist, auf die hier verwiesen wird.

Die Vorrichtung 300 und der daran angeschlossene Brenner 210 bilden gemeinsam das System 400.

Die Ausbildung der Absaugeinrichtung 316 als gesondertes Absauggerät 317 hat den Vorteil, dass dieses nahe am Drahtvorschubgerät 350 angeordnet werden kann, auch wenn das Drahtvorschubgerät 350 über ein langes Schlauchpaket 319 weit von der Schweißstromquelle 310 entfernt ist.

Mit den zuvor beschriebenen Vorrichtungen 100, 300, den Systemen 200, 400 und den beschrieben Verfahren lässt sich die Steuerung der Absaugung vereinfachen bzw. verbessern. Insbesondere kann die Absaugeinrichtung bei einer Bewegung des Brenners, wie zum Beispiel beim Aufnehmen des Brenners durch den Schweißer oder einer Bewegung des Brenners durch einen Schweißroboter, automatisch gestartet werden und/oder die Absaugleistung kann insbesondere abhängig von der Lage des Brenners eingestellt und somit automatisch an die Schweißposition angepasst werden, so dass eine zuverlässige Absaugung von Abgasen, insbesondere Rauchgasen von der Schweiß- bzw. Lötstelle bewirkt wird und gleichzeitig ein stabiler Schutzgasmantel ermöglicht wird.

**Bezugszeichenliste:**

| | | | |
|---|---|---|---|
| 100, 300: | Vorrichtung | 172, 372: | Nutzerschnittstelle des Drahtvorschubgeräts |
| 110, 310: | Schweißstromquelle | | |
| 112, 312: | Leistungsteil | 180, 380: | Anschlussmittel |
| 114, 314: | Steuereinheit der Schweißstromquelle | 190, 390: | Steuereinrichtung |
| | | 200,400: | System |
| 116, 316: | Absaugeinrichtung | 210: | Schweißbrenner |
| 117: | Absaugluftstrom | 212: | Brennerteil |
| 118: | elektrischer Ausgang der Schweißstromquelle | 214, 319: | Schlauchpaket |
| | | 216: | Handgriff |
| 119: | elektrische Leitung | 218: | Brennerkopf |
| 120, 344: | Absauganschluss | 220: | Öffnung |
| 122,322: | Nutzerschnittstelle der Schweißstromquelle | 222: 230: | Absaugöffnungen Brennertaster |
| 150,350: | Drahtvorschubgerät | 232: | Brennersteuereinheit |
| 152: | Schweißdraht | 240,242: | Sensor |
| 154: | Schweißdrahtvorrat | 317: | Absauggerät |
| 156: | Schweißdrahfördereinrichtung | 318: | Anschluss der |
| 160, 360: | Steuereinheit des Drahtvorschubgeräts | | Schweißstromquelle für ein Schlauchpaket |
| 162: | elektrischer Eingang | 330: | Steuereinheit des |
| 164: | Schutzgas-Einlass | | Absauggeräts |
| 165: | Gasleitung | 332: | Ventilator |
| 166: | Schutzgasquelle | 336: | Nutzerschnittstelle des Absauggeräts |
| 168,368: | Brenneranschluss | | |
| 169,324: | Ventil | 372: | Datenverbindung |
| 170: | Schutzgasstrom | | |

## Patentansprüche

1. Vorrichtung (100, 300) zum Einsatz beim Schweißen oder Löten unter Schutzgasatmosphäre,
- mit Anschlussmitteln (180, 380) zum Anschließen eines Brenners (210) mit integrierter Absaugung,
- mit einer Absaugeinrichtung (116, 316) zur Bereitstellung eines Absaugluftstroms (117) über die Anschlussmittel (180, 380) und
- mit einer Steuereinrichtung (190, 390),
**dadurch gekennzeichnet,**
- **dass** die Steuereinrichtung (190, 390) dazu eingerichtet ist, Messwerte über die Lage und/oder die Bewegung eines im Betrieb an die Anschlussmittel (180, 380) angeschlossenen Brenners (210) zu erhalten und die Absaugeinrichtung (116, 316) abhängig von den erhaltenen Messwerten zu steuern.

2. Vorrichtung nach Anspruch 1,
**dadurch gekennzeichnet, dass** die Steuereinrichtung (190, 390) dazu eingerichtet ist, die Absaugleistung abhängig von den erhaltenen Messwerten zu steuern, insbesondere einen von den erhaltenen Messwerten abhängigen Absaugleistungswert einzustellen.

3. Vorrichtung nach Anspruch 1 oder 2,
**dadurch gekennzeichnet, dass** die Steuereinrichtung (190, 390) dazu eingerichtet ist, die Messwerte von dem im Betrieb an die Anschlussmittel (180, 380) angeschlossenen Brenner (210) zu erhalten, insbesondere über die Anschlussmittel (180, 380).

4. Vorrichtung nach einem der Ansprüche 1 bis 3,
**dadurch gekennzeichnet, dass** die Steuereinrichtung (190, 390) dazu eingerichtet ist, abhängig von den erhaltenen Messwerten eine Bewegung des Brenners (210) zu detektieren und bei Detektion der Bewegung die Absaugeinrichtung (116, 316) einzuschalten oder auf einen Leistungsbetrieb umzuschalten.

5. Vorrichtung nach einem der Ansprüche 1 bis 4,
**dadurch gekennzeichnet, dass** die Steuereinrichtung (190, 390) dazu eingerichtet ist, ein Brennertastersignal über das Betätigen eines Brennertasters (230) eines im Betrieb an die Anschlussmittel (180, 380) angeschlossenen Brenners (210) zu erhalten und bei Erhalt des Brennertastersignals die Absaugeinrichtung (116, 316) einzuschalten oder deren Absaugleistung zu erhöhen.

6. Vorrichtung nach einem der Ansprüche 1 bis 5,
**dadurch gekennzeichnet, dass** die Anschlussmittel (180, 380) einen Absauganschluss (120, 344) zum Anschließen einer Absaugleitung eines im Betrieb an die Anschlussmittel (180, 380) angeschlossenen Brenners (210) umfassen.

7. Vorrichtung nach einem der Ansprüche 1 bis 6,
**dadurch gekennzeichnet, dass** die Vorrichtung (100, 300) eine Stromquelle (110, 310) zur Bereitstellung eines Schweiß- oder Lötstroms umfasst.

8. Vorrichtung nach einem der Ansprüche 1 bis 7,
**dadurch gekennzeichnet, dass** die Vorrichtung (100, 300) ein Drahtvorschubgerät (150, 350) umfasst und die Anschlussmittel (180, 380) einen Anschluss (168, 368) am Drahtvorschubgerät (150, 350) umfassen.

9. Vorrichtung nach einem der Ansprüche 1 bis 8,
**dadurch gekennzeichnet, dass** die Steuereinrichtung (190, 390) dazu eingerichtet ist, die Absaugleistung zu Beginn des Betriebs oder Leistungsbetriebs der Absaugeinrichtung (116, 316) zunächst auf einen Start-Absaugleistungswert einzustellen und danach abzusenken.

10. System (200, 400) zum Einsatz beim Schweißen oder Löten unter Schutzgasatmosphäre,
- umfassend eine Vorrichtung (100, 300) nach einem der Ansprüche 1 bis 9 und
- einen an die Anschlussmittel (180, 380) der Vorrichtung (100, 300) anschließbaren Brenner (210) mit integrierter Absaugung.

11. System nach Anspruch 10,
**dadurch gekennzeichnet, dass** der Brenner (210) einen oder mehrere Sensoren (240, 242) zum Messen von Werten über die Lage und/oder die Bewegung des Brenners (210) aufweist und der Brenner (210) dazu eingerichtet ist, unter Verwendung der ein oder mehreren Sensoren (240, 242) bestimmte Messwerte an die Vorrichtung (100, 300) zu übermitteln, insbesondere über die Anschlussmittel (180, 380) der Vorrichtung (100, 300).

12. Verfahren zum Steuern einer Absaugeinrichtung (116, 316) einer Vorrichtung (100, 300) zum Einsatz beim Schweißen oder Löten unter Schutzgasatmosphäre, insbesondere einer Vorrichtung nach einem der Ansprüche 1 bis 9,
- bei dem ein oder mehrere Messwerte über die Lage und/oder die Bewegung eines an die Vorrichtung (100, 300) zum Schweißen oder Löten angeschlossenen Brenners (210) bestimmt werden und
- bei dem die Absaugeinrichtung (116, 316) abhängig von den ein oder mehreren Messwerten gesteuert wird.

13. Verfahren nach Anspruch 12,
**dadurch gekennzeichnet, dass** die Absaugleistung der Absaugeinrichtung (116, 316) abhängig von den Messwerten gesteuert wird.

14. Verfahren nach Anspruch 12 oder 13,
**dadurch gekennzeichnet, dass** die Messwerte über die Lage und/oder die Bewegung des Brenners (210) unter Verwendung eines oder mehrerer in den Brenner (210) integrierter Sensoren (240, 242) gemessen wird.
